# DEMANDE DE BREVET EUROPEEN

(11) **EP 2 136 579 A1**
(43) Date de publication de la demande: **23.12.2009**
(21) Numéro de dépôt: 09163267.9
(22) Date de dépôt: 19.06.2009
(51) Int. Cl.: H04W 4/02

(54) **Procédé de production de contenus multimédia de géolocalisation, système de gestion comportementale de tels contenus multimédia, et procédé de géoguidage utilisant ces contenus multimédia**

(30) Priorité: 19.06.2008 FR 0854061
(71) Demandeur: Le Hub, 75020 Paris (FR)
(72) Inventeur: Caillet, Bruno, 75020 Paris (FR); Behar, Damien, 75011 Paris (FR)
(74) Mandataire: Pontet, Bernard

(57) **Abrégé**

Procédé pour produire des applications de géoguidage multimédia comportemental, destinées à être embarquées dans des appareils nomades pourvus de moyens de géolocalisation, ce procédé comprenant les étapes suivantes consistant à :
- déterminer des informations de géolocalisation pour un ensemble de spots dans une zone géographique prédéterminée,
- associer à chacun desdits spots, des contenus multimédia prévus pour être visualisés sur lesdits équipements nomades,
- conditionner la visualisation desdits contenus multimédia à la satisfaction de conditions incluant une condition de géolocalisation de l'un desdits spots,
- conditionner la visualisation d'un contenu multimédia à des données comportementales enregistrées au cours du déplacement de l'utilisateur,
- assembler lesdits contenus multimédia et lesdites conditions au sein d'une application logicielle prévue pour être embarquée dans au moins l'un desdits appareils nomades

Voir figure 1.

Utilisation notamment dans les sites touristiques ou remarquables, les lieux historiques et d'intérêt, ainsi que dans les sites urbains.

## Description

La présente invention concerne un procédé pour produire des applications de géoguidage multimédia comportemental. Elle vise également un système de gestion de contenus mettant en oeuvre le procédé selon l'invention, ainsi qu'un procédé de géoguidage mise en oeuvre au sein d'appareils communicants nomades ou portables.

Il existe actuellement un développement considérable d'applications logicielles embarquées dans des appareils communicants portables ou nomades. Parmi ces applications embarquées, on distingue les applications de géolocalisation utilisant actuellement les signaux du système GPS de positionnement global par satellites, et à terme ceux du système Galiléo lorsqu'il sera déployé.

Par ailleurs, il existe une forte demande pour des équipements de guidage dans les musées, et dans les sites touristiques et urbains. Si différentes formes d'audioguides sont déjà proposées, aucune n'intègre la dimension sensible d'une visite, et aucune ne permet une approche véritablement libre et personnalisée. Du parcours d'un visiteur ou d'un promeneur.

Plus généralement, Il n'existe pas actuellement de solution permettant de géolocaliser un utilisateur dans un espace, d'analyser son comportement afin de générer un itinéraire, un scénario, un programme multimédia personnalisé et contextualisé.

Le but de la présente invention est de proposer une solution technologique visant, d'une part, à produire des contenus multimédia interactifs de géolocalisation, et d'autre part à opérer ces contenus multimédia embarqués dans des appareils communicants portables dans une approche interactive avec prise en compte de la personnalité et du comportement des utilisateurs.

Cet objectif est atteint avec un procédé pour produire des applications de géoguidage multimédia comportemental, destinées à être embarquées dans des appareils nomades pourvus de moyens de géolocalisation, ce procédé comprenant les étapes suivantes consistant à :
- déterminer des informations de géolocalisation pour un ensemble de spots dans une zone géographique prédéterminée,
- associer à chacun desdits spots, des contenus multimédia prévus pour être visualisés sur lesdits équipements nomades,
- conditionner la visualisation desdits contenus multimédia à la satisfaction de conditions incluant une condition de géolocalisation de l'un desdits spots,
- assembler lesdits contenus multimédia et lesdites conditions au sein d'une application logicielle prévue pour être embarquée dans au moins l'un desdits appareils nomades

Le procédé de production selon l'invention peut avantageusement comprendre une étape pour conditionner la visualisation d'un contenu multimédia à la détection d'une information saisie par l'utilisateur de l'appareil nomade.

Il peut aussi comprendre une étape pour conditionner la visualisation d'un contenu multimédia à la détection de mouvements de la tête de l'utilisateur, ainsi qu'une étape pour conditionner la visualisation d'un contenu multimédia à des données comportementales enregistrées au cours du déplacement de l'utilisateur.

Suivant un autre aspect de l'invention, il est proposé un système (CMS) pour gérer des contenus multimédia géolocalisés, comprenant :
- des moyens pour produire des applications logicielles obtenues avec le procédé de production selon l'une quelconque des revendications précédentes
- des moyens pour stocker lesdites applications logicielles, et
- des moyens pour diffuser lesdites applications logicielles à destination d'appareils communicants nomades pourvus de moyens de géolocalisation.

Suivant encore un autre aspect de l'invention, il est proposé un procédé pour géoguider un utilisateur pourvu d'un appareil communicant nomade équipé de moyens de géolocalisation et dans lequel une application logicielle de géoguidage obtenue avec le procédé de production selon l'invention a été préalablement chargé, comprenant les étapes suivantes :
- géolocaliser l'appareil nomade et traiter les données de géolocalisation,
- détecter une localisation dudit appareil nomade sur un spot parmi une pluralité de spots au sein d'une zone géographique prédéterminée,
- acquérir et traiter des données comportementales sur ledit spot et/ou sur des spots antérieurs, et
- sélectionner parmi des contenus multimédia interactifs stockés dans ladite application logicielle, un contenu multimédia interactif en relation avec ledit spot détecté et le traitement desdites données comportementales, et
- visualiser sur ledit appareil nomade ledit contenu multimédia interactif ainsi sélectionné.

On va maintenant expliquer les avantages de la présente invention dans le cadre du concept de « Paysage Intelligent Ambiant ».

On entend ici par « paysage », la notion de territoire qui englobe des formes géologiques physiques naturelles, et des actions de l'homme sur le territoire, notamment architecturales et urbanistiques. le paysage symbolise parfois le tableau d'ensemble d'un secteur d'activité ou d'un environnement, comme le paysage audiovisuel français.

On entend par « ambiant », ce qui qualifie le paysage et définit une relation avec le visiteur, car ce qui est ambiant est ce qui constitue le milieu où l'on se trouve. Le paysage n'est alors pas simplement bidimensionnel, mais tridimensionnel. Dans ces trois dimensions le visiteur est immergé et non seulement profite totalement du paysage, mais en fait partie lui aussi, en est en quelque sorte « acteur » et se déplace à l'intérieur.

On entend par « intelligent », ce qui est vivant, caractérise une capacité à « être ». L'intelligence est combinatoire, elle met en oeuvre différents éléments pour donner du sens, connaître, savoir, communiquer...Intelligent se rapporte à l'esprit ou simplement aux moyens conjugués pour obtenir un résultat ; traduit ici ce qui fait sens dans un Paysage Ambiant.

Le Paysage Ambiant Intelligent (PAI) est une expérience en immersion d'un paysage combiné à des éléments qui permettent de le qualifier d'intelligent, et qui est proposé à un visiteur par l'usage de technologies numériques. Résultant d'une scénarisation de contenus éditoriaux spécifiques, le PAI est la capacité de « calquer » des informations numériques sur un espace ouvert, de les géolocaliser et de les indexer, afin de créer un véritable accompagnement personnalisé dans un territoire donné. La consultation de ces informations s'opère via une technologie de portabilité (PDA, smart phone, etc), qui permet de jouer d'une amplification du réel afin de valoriser différemment un patrimoine plus large que le bâtiment historique, un patrimoine qui intègre la mémoire intime de la ville, son histoire... un patrimoine vivant qui dessine aussi pour demain d'autres pratiques de l'espace, urbain en particulier.

Le PAI offre un spectacle multiple, permanent et renouvelé ; le PAI permet l'étude des parcours, des déplacements, des choix et des postures des visiteurs ; le PAI apporte des statistiques précieuses sur les usages pour repenser l'espace de circulation de manière harmonieuse.

Le procédé de production de contenu multimédia géolocalisés selon l'invention peut être mis en oeuvre dans un navigateur Internet. Il permet de gérer les contenus multimédia, de définir la géolocalisation d'une zone, de créer des scénarii de balades et d'organiser le contenu.

Le procédé de géoguidage selon l'invention peut être mis en oeuvre sur un assistant personnel, un équipement portable dédié ou un téléphone portable d'un utilisateur. Il permet de restituer un projet défini dans le CMS, et enverra les informations à l'utilisateur selon sa géolocalisation ses déplacements, et l'analyse de son comportement.

Le système de gestion de contenus géolocalisés selon l'invention est prévu pour réaliser les fonctions suivantes :
- créer et gérer des projets,
- créer et gérer des utilisateurs et leurs droits d'accès et de modification des projets,
- créer et gérer des spots (zone de géolocalisation) de type GPS, Wifi, Indoor ou autre,
- créer et gérer des univers,
- créer et gérer des conditions, ce qui va permettre d'utiliser des variables afin d'offrir du contenu dynamique à l'utilisateur selon la façon dont il agit,
- créer et gérer des profils (un profil est un sous projet), simuler une balade au sein du système pour vérifier quels contenus vont être envoyés à l'utilisateur selon les variables que l'on peut entièrement paramétrer à tout moment.

Les conditions possibles portent sur les entités suivantes : Spot, Groupe de Spots, Univers, Groupe d'Univers, Variables (score ou date actuelle par exemple), Contenu, Question.

Différents modules existent et ont leur utilité dans différents endroits du système. Un module « Upload » permet de télécharger et de sauvegarder les fichiers à un endroit précis sur le serveur. Un module MP3, permet de lire un fichier MP3 téléchargé sur le serveur. Un module Carte permet de voir les spots sur une carte en 2 dimensions de la zone du projet et d'améliorer ainsi grandement l'ergonomie du système. Elle sert également à simuler la balade dans le système de prévisualisation.

Chaque utilisateur se définit par un profil qu'il indique lui-même ; s'y ajoute, automatiquement enregistré, la « déambulation » de l'utilisateur dans le paysage. Chaque zone traversée proposant des contenus éditoriaux consultés par le visiteur et signalée au système, modifie ou non les contenus proposés sur d'autres zones. La résultante de ces types d'informations permet d'offrir à l'utilisateur les données en rapport au paysage de la manière la plus optimisée et contextualisée possible, des données en correspondance d'une zone à l'autre en fonction de celles déjà consultées. Il y a création d'un itinéraire véritablement personnalisé.

Le procédé de géoguidage selon l'invention procure ainsi une application multimédia d'une technologie qui permet de géolocaliser un utilisateur dans un espace, d'analyser son comportement afin de générer un itinéraire, un scénario, un programme multimédia personnalisé et contextualisé.

Dans le procédé de géoguidage selon l'invention, l'interactivité est effective selon trois particularités : le lieu géolocalisé, le profil utilisateur, et le choix du programme (jeu de type questionnaire à choix multiples, parcours, guide...)

Des points sont identifiés sur le territoire, ils permettent de définir une cartographie interactive de points GPS. Lorsque le visiteur « arrive sur ce point », les informations qui y sont associées lui sont transmises. Cependant les informations sont livrées en fonction du profil que le visiteur aura renseigné au départ de l'itinéraire.

Le procédé de géoguidage selon l'invention croise automatiquement les informations disponibles pour le point GPS avec le profil utilisateur et le choix du programme, et diffuse des données pertinentes pour le visiteur dans son itinéraire. Ces données sont personnalisées et peuvent donc varier en fonction du profil de l'utilisateur et de son choix de programme.

Des unités éditoriales multimédia (MEDIA) sont intégrées dans un scénario en fonction d'un contexte et d'un profil. Entre guidage, jeu et événement, le procédé de géoguidage selon l'invention permet un accompagnement personnalisé dans le territoire, son histoire, sa vie au quotidien.

Le procédé de géoguidage selon l'invention permet de collecter des statistiques comportementales : la dimension personnalisation du système permet une information précise et statistique concernant le comportement des usagers connectés. Nature des publics, lieux de passage, nature des choix... sont analysés et quantifiés en temps réel.

On enregistre les déplacements du visiteur afin de lui restituer des contenus éditoriaux de la manière la plus pertinente possible. Les informations sur ses déplacements peuvent être stockées, puis analysées pour étudier le comportement d'un piéton dans une ville, les usages urbains.

L'enregistrement du profil au début de l'itinéraire permet d'analyser les publics et d'avoir des données précises sur la fréquentation des parcours.

D'autres avantages et caractéristiques de l'invention apparaîtront à l'examen de la description détaillée d'un mode de mise en oeuvre nullement limitatif, et des dessins annexés sur lesquels :
- la figure 1 illustre schématiquement une mise en oeuvre du procédé de production d'application multimédia interactive selon l'invention ;
- la figure 2 est une vue synoptique d'un système de gestion de contenus multimédia selon l'invention ;
- La figure 3 est un organigramme simplifié correspondant à un premier exemple de mise en oeuvre du procédé de géoguidage selon l'invention dans un assistant personnel ;
- La figure 4 est un organigramme simplifié correspondant à un second exemple de mise en oeuvre du procédé de géoguidage selon l'invention, prenant en compte les mouvements de l'utilisateur ;
- La figure 5 est un organigramme simplifié d'un troisième exemple de mise en oeuvre du procédé de géoguidage selon l'invention, intégrant un avatar de l'utilisateur ;
- La figure 6 est un diagramme d'action pour une application logicielle de géoguide obtenue à partir du procédé de production selon l'invention ;
- Les figures 7 à 11 illustrent des exemples de pages-écrans visualisées sur un équipement portable dans lequel est embarquée une application logicielle de géoguidage selon l'invention ; et
- La figure 12 illustre schématiquement un module de traitement associé à un spot.

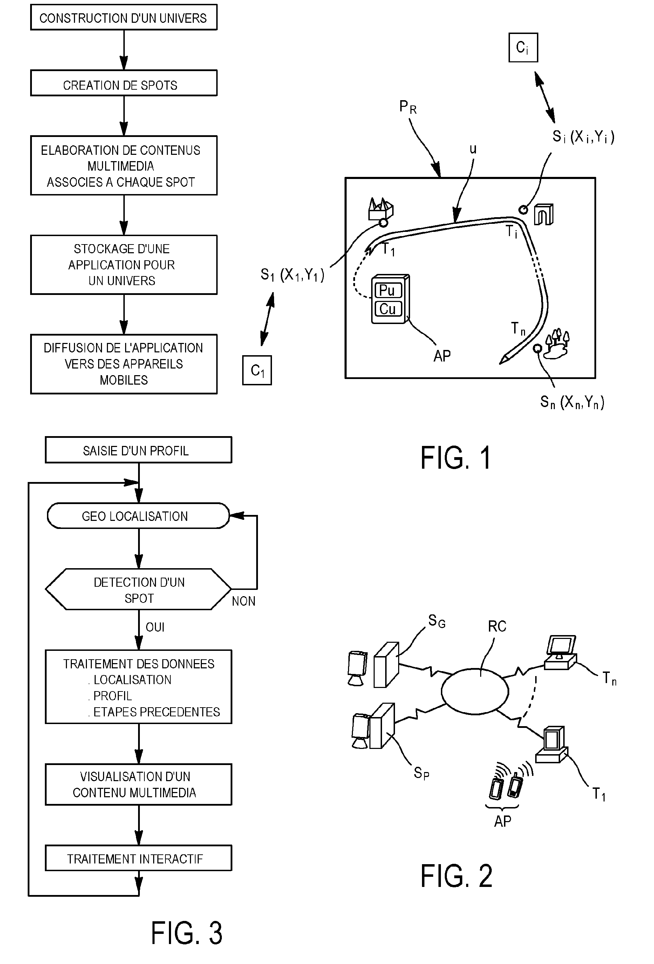

On va maintenant décrire, en référence aux figures 1 et 2, un exemple de mise en oeuvre du procédé de production de contenu de géoguidage selon l'invention.

Le procédé de production selon l'invention a pour objet de créer, au sein d'une zone Pa, des spots S1,..Si ,..Sn, et un ou plusieurs parcours U, réalisant ainsi ce qui a été défini précédemment comme un Paysage Ambiant Intelligent (PAI) et un ou plusieurs univers de ballade ou visite.

Chaque spot S1,...Si,..Sn est indexé par sa géolocalisation (X1,Y1),...,(Xi,Yi),...(Xn,Yn) et correspond à un site ou point remarquable de la zone Pa.

A chaque spot S1,..Si..Sn est associé un contenu multimédia interactif C1,...Ci..Cn. L'ensemble des contenus multimédia associés aux différents spots d'un univers U est destiné à être stockée dans la mémoire d'un appareil portable AP que va consulter et utiliser un promeneur. A chaque passage T1,...Ti,..Tn dans un spot S1,...Si..Sn, l'appareil portable va s'activer automatiquement et afficher le contenu multimédia correspondant C1,..Ci,..Cn.

Les étapes du procédé de production de contenu selon l'invention comprennent :
- une étape de construction d'un univers U sous la forme d'un parcours thématique, réalisée à partir d'une cartographie,
- une étape de création d'un ensemble de spots,
- une étape d'élaboration de contenus multimédia associés à chaque spot, à partir notamment de la consultation de bases de données documentaires,
- Une étape de constitution et de stockage d'une application logicielle à partir de l'ensemble de ces contenus multimédia,
- Une étape de diffusion de cette application logicielle vers des appareils mobiles, via des moyens de communication filaire et/ou non filaire.

Le procédé de production de contenus multimédia selon l'invention peut être déployé sur un serveur de production Sp, tandis que les applications logicielles ainsi produites peuvent être exploitées et diffusées à partir d'un serveur de gestion SG et diffusées vers une pluralité de terminaux utilisateurs TU1,...TUn via un réseau de communication RC tel qu'Internet. Ces terminaux utilisateurs peuvent être connectés par voie filaire ou non filaire à des appareils mobiles ou portables AP sur lesquels les applications logicielles sont destinées à être embarquées.

Le procédé de géoguidage selon l'invention qui est implémenté dans les applications logicielles embarquées sur les appareils mobiles AP, comprend, dans un premier exemple de réalisation illustré par la figure 3 :
- une étape pour saisir un profil d'utilisateur,
- une étape de géolocalisation, au cours de laquelle des signaux de positionnement, tels que des signaux GPS ou équivalents, sont collectés,
- une étape de détection de spots préalablement définis au moment de la production de l'application logicielle,
- en cas de détection d'un spot, un traitement de données de localisation correspondant au spot, de données de profil préalablement saisies et des actions effectuées par l'utilisateur lors des étapes précédentes,
- en résultat de ce traitement, une visualisation sur l'écran de l'appareil portable d'un contenu multimédia correspondant au spot détecté, et
- un traitement interactif au sein de ce contenu multimédia, puis à l'issue de ce traitement, un retour en situation de géolocalisation.

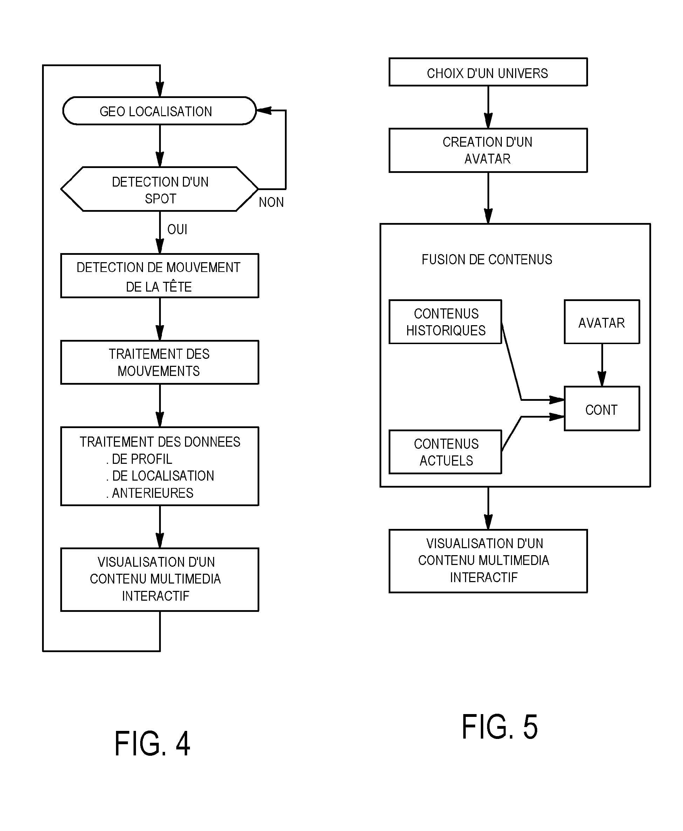

Dans un second exemple de mise en oeuvre du procédé de géoguidage selon l'invention, illustré par la figure 4, la détection d'un spot est suivie d'une détection des mouvements de la tête de l'utilisateur, qui est effectuée en utilisant un casque ou équipement adapté pour une telle détection.

Les informations de mouvement ainsi obtenues sont traitées pour détecter l'orientation du regard de l'utilisateur et adapter le contenu multimédia et les questions qui lui sont éventuellement posées dans le cadre de ce contenu.

Dans une version particulière du procédé de géoguidage selon l'invention illustrée par la figure 5, l'utilisateur est invité à choisir un univers, parmi une pluralité d'univers programmés dans l'application logicielle.

Cette application logicielle a été programmée pour proposer et créer un avatar pour l'utilisateur de l'appareil portable. Cet avatar peut par exemple représenter un personnage historique ayant fréquenté les lieux ciblées par les spots et constituant les étapes de l'univers.

Une fusion de plusieurs contenus peut avoir été programmée pour délivrer et afficher un contenu composite incluant par exemple un premier contenu se référant au passé et une second contenu actuel. L'avatar peut alors être représenté comme se déplaçant dans l'un ou l'autre de ces deux contenus ou dans un mélange de ces deux contenus.

On va maintenant exposer, en référence au tableau co-dessous, un exemple de réalisation d'une application logicielle embarquée, sous la forme d'un ensemble de fichiers au format XML réalisée en utilisant l'outil logiciel Flex 2.

| |
|---|
| **Project.xml** |
| Sauvegarde des informations globales sur un projet à savoir : |
| Un identifiant, un nom, une description, une date de création, un nom de fichier correspondant à la carte du projet, les dimensions longueur et largeur pour la carte. |
| |
| **Profiles.xml** |
| Contient les différents profils du système. |
| Chaque profil contient un identifiant, un nom, une description et un nom de fichier XML. Ce dernier contiendra la liste de toutes les étapes de ce profil. |
| Une étape est une liste de contenu correspondant à un ou plusieurs spots. |
| |
| **Spots.xml** |
| Contient tous les spots et groupes de spots du projet. |
| Chaque groupe de spot peut contenir plusieurs spots. |
| Chaque groupe de spot contient un identifiant, un nom, une description, des coordonnées de géolocalisation, ainsi qu'un rayon en mètre. |
| Ses coordonnées de géolocalisation et son rayon en mètre ne sont pas paramétrables, ils sont définis par les spots que contient le groupe de spot. |
| Grâce à un algorithme, les coordonnées de géolocalisation correspondront à un épicentre des spots contenus dans ce groupe de spot, et le rayon permettra d'englober tous les spots. |
| Chaque spot contient un identifiant, un nom, une description, des coordonnées de géolocalisation, ainsi qu'un rayon en mètre. |
| |
| **Universes.xml** |
| Contient tous les univers et groupes d'univers du projet. |
| Chaque groupe d'univers peut contenir plusieurs univers. |
| Chaque groupe d'univers contient un identifiant, un nom, une description. |
| Chaque univers contient un identifiant, un nom, une description, une icône et une couleur. |
| |
| **Contents.xml** |
| Contient tous les contenus du système. |
| Un contenu aura au moins un identifiant et un nom. |
| Un contenu peut être : |
| - Un texte avec ou sans audio |
| - Une image ou une vidéo |
| - Une question |
| - Un système de conditions |
| - Un système de choix d'univers |

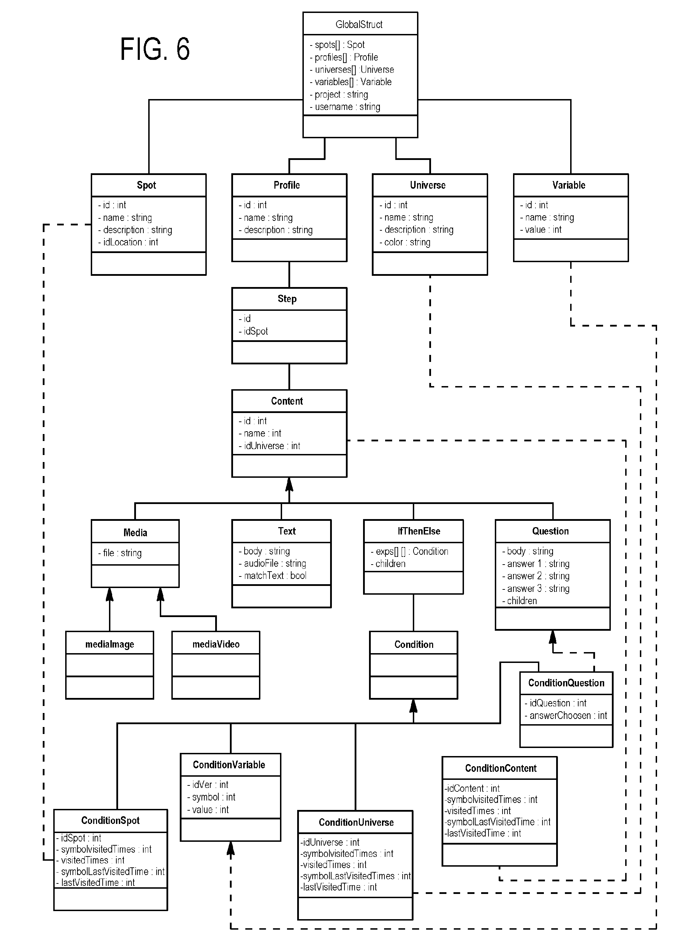

La figure 6 illustre un diagramme des actions exécutées lors de la mise en oeuvre du procédé de géoguidage dans un appareil mobile. Ces actions incluent le traitement de conditions qui contribuent à faire de ce procédé de géoguidage un outil contextualisé et interactif.

Dans un exemple pratique de réalisation d'une application logicielle prévue pour être transmise à un assistant personnel (PDA), cette application peut être structurée sous la forme de modules :
- un module de géolocalisation, traitant des coordonnées GPS ou issues d'autres systèmes de géolocalisation,
- un module de chargement des fichiers XML présentés ci-dessus et de la carte,
- un module principal, sous la forme d'une API, prévu pour envoyer les contenus à l'utilisateur selon un ensemble de conditions et récupérer les données comportementales,
- un module d'affichage, prévu pour procurer un rendu visuel des contenus multimédia générés avec le procédé de production selon l'invention.

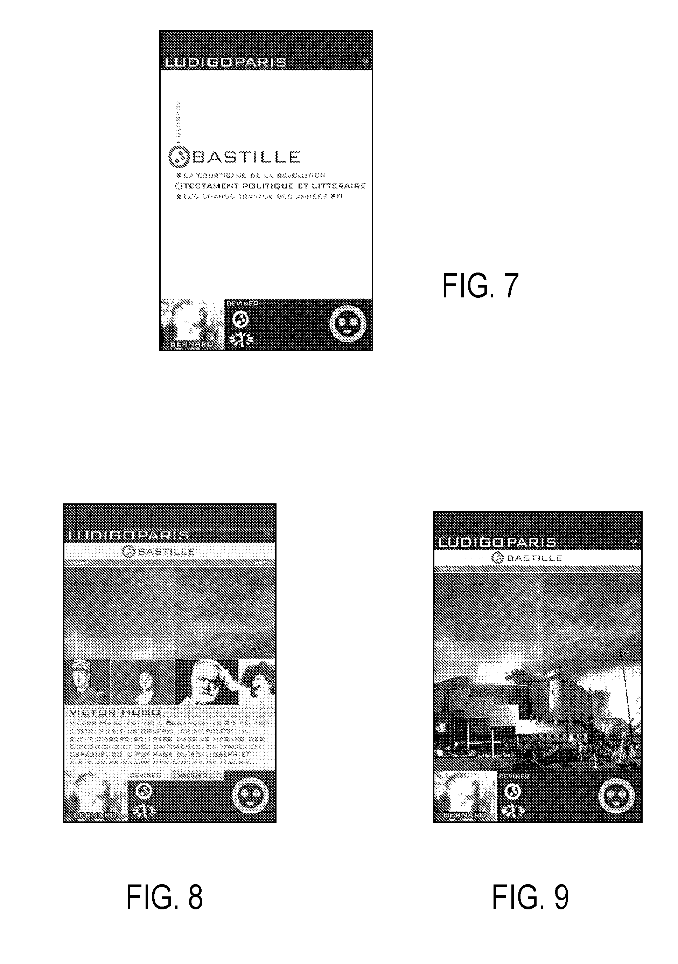

On va maintenant décrire, en référence aux figures 7 à 11, plusieurs exemples de pages écran ou « frames » générées lors de la mise en oeuvre du procédé de géoguidage selon l'invention.

Une première page-écran (figure 7) procure un accueil pour une application à dimension ludique. Cette application déclenche un signal, qui peut-être sonore et/ou visuel, quand l'utilisateur passe à proximité d'un lieu correspondant à une étape d'une ballade. Cette page écran comporte aussi une fenêtre incluant une représentation de l'avatar de l'utilisateur.

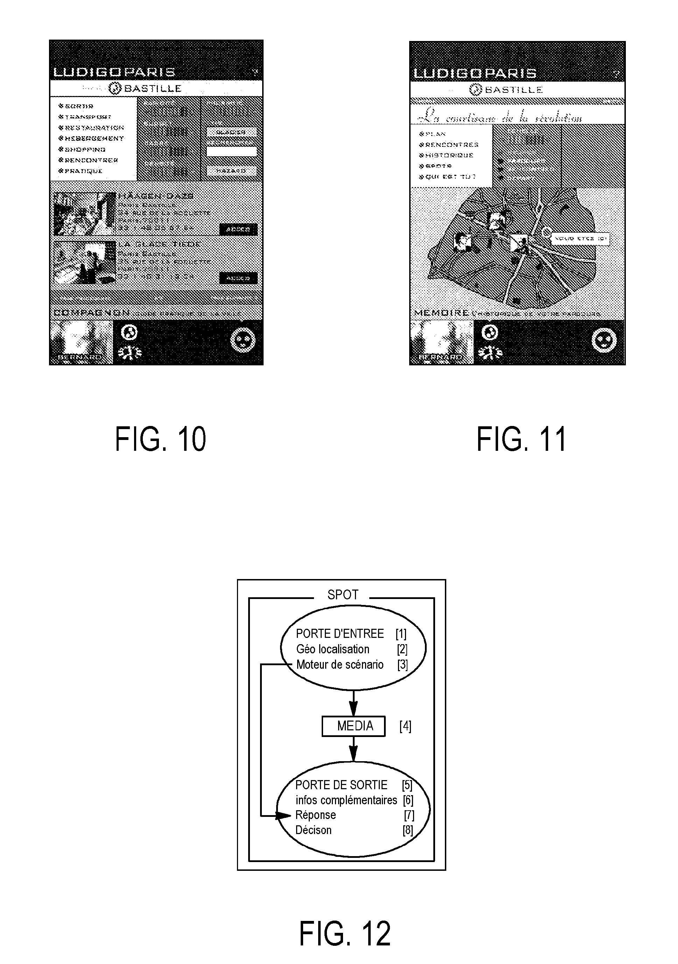

Une autre page-écran (figure 8) peut permettre de visualiser des contenus multimédia mixant des sources d'époque et des sources actuelles, tandis qu'une page-écran (figure 9) peut être dédiée à des devinettes sur des personnages historiques en relation avec l'univers dans lequel cette ballade s'inscrit. Le procédé de géoguidage selon l'invention peut aussi fournir des services associés aux sites visités, tel que des restaurants, des hébergements ou des activités de loisir, en référence à la page-écran illustrée par la figure 10.

Le parcours effectué par l'utilisateur peut être visualisée sous la forme d'une carte sur laquelle est indiquée la position effective de l'utilisateur et les spots de la zone exploitée, en référence à la page-écran illustrée par la figure 11.

Selon le programme, le guidage peut être utilisé à différentes fins (classes de découverte, jeu de rôle urbain, visite...). Voici l'exemple d'une application à dimension ludique. L'application déclenche un signal quand l'utilisateur passe a proximité d'un lieu ou figure une étape d'une ballade. Elle propose en premier l'étape de la balade dans laquelle le joueur évolue. En bas, l'avatar du joueur qui n'a pas encore découvert sa personnalité et les différentes options de la première phase de jeu.

On va maintenant décrire un exemple concret de réalisation des applications logicielles pour la mise en oeuvre du procédé de production de contenus multimédia selon l'invention.

La première application logicielle, qui correspond au système de gestion de contenu (CMS) est développée avec l'outil Flex2® commercialisé par la société Adobe®. Cette première application logicielle fonctionne dans n'importe quel navigateur Internet pouvant gérer le « plug-in Flash Player 9 ». Cette application communique avec un serveur en utilisant des scripts au langage PHP5.

La seconde application logicielle, désignée sous le terme d' « application PDA » est développée avec l'outil logiciel Flash Lite 2.1 de la société Adobe. Cette application utilise la technologie Janus-Flash® pour le module GPS ainsi que la communication avec des équipements pour la détection de mouvement, et la technologie MortScript ((c) Mirko Schenk, mort@sto-helit.de, http://www.sto-helit.de) pour la gestion du son.

La première application logicielle, dédiée au système de gestion de contenu et réalisée en Flex 2®, repose sur un ensemble de vues en langage MXML et, pour l'aspect fonctionnel, sur du code écrit en langage ActionScrip 3. Le tableau ci-dessus liste, à titre d'exemple non limitatif, des vues constituant la première application logicielle, ainsi que leur fonction correspondante :

| |
|---|
| Atelier.mxml : Racine de l'application. Elle comprend la vue d'authentification, la vue du système de gestion des projets et des utilisateurs, ainsi que la vue principale. |
| La vue principale encapsule les différentes vues suivantes. |
| AddExistingContent.mxml : Ajouter un contenu parmi la liste de contenu dans un spot. |
| AddMusic.mxml : Ajouter une musique d'ambiance à un groupe de spot. |
| Admin.mxml : Interface d'administration des projets et des utilisateurs. |
| AdminProject.mxml : Sous-interface d'administration des projets. |
| AdminStatusBar.mxml : Vue du bas de l'écran pour le module d'administration. |
| AdminTopBar.mxml : Vue du haut de l'écran pour le module d'administration. |
| AdminUser.mxml : Sous-interface d'administration des utilisateurs. |
| ConditionLine.mxml : Interface d'une condition dans un système de condition. |
| ContentChangeUniverse.mxml : Ajout ou modification d'un changement d'univers. |
| ContentIfThenElse.mxml : Ajout ou modification d'un système de conditions. |
| ContentImage.mxml : Ajout ou modification d'une image. |
| ContentManager.mxml : Système de gestion de tous les contenus. |
| ContentQuestion.mxml : Ajout ou modification d'une question. |
| Contents.mxml : Interface principale permettant d'afficher tous les contenus d'un spot, et d'agir sur ces contenus. |
| ContentText.mxml : Ajout ou modification d'un texte avec ou sans audio. |
| ContentUniverseChoose.mxml : Ajout ou modification d'un système de choix d'univers. |
| ContentVideo.mxml : Ajout ou modification d'une vidéo. |
| MapManager.mxml : Interface d'affichage de la carte. |
| MP3Player.mxml : Interface de lecture d'un MP3. |
| Preview.mxml : Interface du système de prévisualisation permettant de jouer les scénarii. De modifier toutes les variables. Contient également le module carte pour une meilleure ergonomie. |
| PrintTexts.mxml : Interface affichant tous les textes du système afin d'imprimer une liste pour les enregistrements audio. |
| ProfileManager.mxml : Ajout ou modification des profils du projet (un profil est l'équivalent d'un sous-projet). |
| ScenarioBar.mxml : Menu principal du système. Permet de naviguer à travers les différentes vues principales. |
| SpotList.mxml : Liste de tous les spots et groupes de spots. |
| SpotManager.mxml : Interface de gestion des Spots et Groupes de Spots. |
| StatusBar.mxml : Interface proposant diverses informations sur le système en bas de l'écran. |
| TextDefaultInput.as : Amélioration du champ de texte Flex par défaut. |
| TitledArrayCollection.as : ArrayCollection (composant Flex par défaut) amélioré contenant quelques informations comme un champ de texte et un nombre. |
| TopBar.mxml : Interface proposant diverses informations en haut de l'écran. |
| UniverseManager.mxml : Interface de gestion des Univers. |
| Upload.mxml : Interface permettant d'uploader un fichier sur le serveur. |
| |
| **ItemRenderer** |
| Flex utilise différents ItemRenderer pour rendre visuellement des Objets. |
| ContentItemRenderer.mxml : affiche tous les types de contenu Ludigo CustomTreeItemRenderer.as : affiche tous les types de contenu Ludigo sous forme d'arbre |
| DebugItemRenderer.mxml : affiche tous les types de contenu Ludigo dans l'interface de prévisualisation |
| GlobalItemRenderer.mxml : affiche tous les types de contenu Ludigo et plus d'informations à leur sujet. |
| GPSLocationItemRenderer.mxml : affiche les coordonnées GPS |
| ProjectItemRenderer.mxml : affiche les informations d'un projet |
| UserItemRenderer.mxml : affiche les informations d'un utilisateur |
| ***Classes ActionScript 3*** |
| GlobalStruct.as : Structure globale principale et racine de tout le système. |
| Permet de gérer un projet. Se présente sous le design pattern : Singleton (permet d'assurer son unicité). |
| Content.as : Classe virtuelle pure désignant tout type de contenu Ludigo. |
| Les classes suivantes héritent de la classe Content. |
| ChangeUniverse.as : Permet de définir l'univers courant. Exit.as : Permet de signaler au système que l'on sort directement du spot courant. |
| Question.as : Une question et 2 ou 3 réponses. |
| TextContent.as : Un texte avec ou sans fichier audio associé. Le module MP3 permet de jouer le fichier audio associé. Le module d'upload permet de |
| télécharger le fichier sur le serveur. |
| UniverseChoose.as : Un système d'un ou plusieurs univers Media.as : Classe virtuelle pure décrivant un fichier multimédia qui sera |
| uploadé sur le serveur. |
| MediaImage.as : Hérite de la classe Media. Correspond à une image. Le module d'upload permet de télécharger le fichier sur le serveur. |
| MediaVideo.as : Idem que MediaImage mais pour un fichier vidéo. |
| IfThenElse.as : Système d'une ou plusieurs conditions. |
| Condition.as : Classe virtuelle pure correspondant à une condition. |
| ConditionContent.as : Condition portant sur un contenu de type question. |
| ConditionGroupSpot.as : Condition portant sur un groupe de spot. |
| ConditionGroupUniverse.as : Condition portant sur un groupe d'univers. |
| ConditionQuestion.as : Condition portant sur une question. |
| ConditionSpot.as : Condition portant sur un spot. |
| ConditionUniverse.as : Condition portant sur un univers. |
| ConditionVariable.as : Condition portant sur une variable. |
| Arrow.as : Affichage d'une flèche pour le système de prévisualisation sur carte. |
| Authentification.as : Module d'authentification |
| GPSLocation.as : Classe décrivant une coordonnée GPS |
| Map.as : Carte Upload.as : Module d'Upload |

La seconde application logicielle « PDA » est réalisée en Flash Lite 2.1 pour Windows Mobile 5 ou 6. Le code « binary falsh » est ensuite appelé par un fichier exécutable sous Windows Mobile créé au moyen de l'outil logiciel « Janus-Flash »

Sont présentées ci-dessous des exemples de classes développées pour cette seconde application logicielle :
**API.as** : toutes les fonctions pour lancer les contenus correspondant au comportement de l'utilisateur.
**GlobalStruct.as:** singleton contenant toutes les variables globales essentielles au bon fonctionnement de l'application
**Init.as** : chargement des fichiers XML
**MainFrame.as** : permet de gérer l'interface des différents contenus Ludigo ainsi que leurs animations et enchainement.
**Map.as :** permet de gérer la carte du système.
**SoundModule.as** : permet de gérer le son c'est-à-dire les contenus audio et les musiques d'ambiance des groupes de spots.

D'autres classes, semblables à celles écrites pour la première application logicielle CMS, ont été développées pour cette application logicielle « PDA » :
Spot.as, Step.as, TextContent.as, MediaImage.as, MediaVideo.as, Universe.as, UniverseChoose.as, Variable.as, Condition.as, ConditionContent.as, ConditionGroupSpot.as, ConditionQuestion.as, ConditionSpot.as, ConditionUniverse.as, ConditionVariable.as, Profile.as, Project.as, Question.as, GroupSpot.as, GroupUniverse.as, IfThenElse.as, GPSLocation.as

Bien sûr, l'invention n'est pas limitée aux exemples qui viennent d'être décrits et de nombreux aménagements peuvent être apportés à ces exemples sans sortir du cadre de l'invention.

En particulier, les procédés de production de contenus géolocalisés et de géoguidage peuvent être mis en oeuvre avec toute technologie de communication et géolocalisation.

## Revendications

1. Procédé pour produire des applications de géoguidage multimédia comportemental, destinées à être embarquées dans des appareils nomades pourvus de moyens de géolocalisation, ce procédé comprenant les étapes suivantes consistant à :
- déterminer des informations de géolocalisation pour un ensemble de spots dans une zone géographique prédéterminée,
- associer à chacun desdits spots, des contenus multimédia prévus pour être visualisés sur lesdits équipements nomades,
- conditionner la visualisation desdits contenus multimédia à la satisfaction de conditions incluant une condition de géolocalisation de l'un desdits spots,
- conditionner la visualisation d'un contenu multimédia à des données comportementales enregistrées au cours du déplacement de l'utilisateur,
- assembler lesdits contenus multimédia et lesdites conditions au sein d'une application logicielle prévue pour être embarquée dans au moins l'un desdits appareils nomades

2. Procédé de production selon la revendication 1, **caractérisé en ce qu'**il comprend en outre une étape pour conditionner la visualisation d'un contenu multimédia à la détection d'une information saisie par l'utilisateur de l'appareil nomade.

3. Système (CMS) pour gérer des contenus multimédia géolocalisés, comprenant :
- des moyens pour produire des applications logicielles obtenues avec le procédé de production selon l'une quelconque des revendications précédentes, en particulier créer et gérer des conditions, ce qui va permettre d'utiliser des variables afin d'offrir du contenu dynamique à l'utilisateur selon la façon dont il agit,
- des moyens pour stocker lesdites applications logicielles, et
- des moyens pour diffuser lesdites applications logicielles à destination d'appareils communicants nomades pourvus de moyens de géolocalisation.

4. Système de gestion de contenus selon la revendication 3, **caractérisé en ce qu'**il comprend en outre des moyens pour créer et gérer des comptes d'utilisateurs d'applications logicielles embarquées dans des appareils nomades.

5. Système de gestion selon l'une des revendications 3 ou 4, **caractérisé en ce qu'**il comprend en outre des moyens pour gérer des profils d'utilisateurs d'applications logicielles embarquées dans des appareils nomades.

6. Système de gestion selon l'une des revendications 3 à 5, **caractérisé en ce qu'**il comprend en outre des moyens pour simuler un parcours d'un utilisateur d'une application logicielle embarquée sur un appareil nomade.

7. Procédé pour géoguider un utilisateur pourvu d'un appareil communicant nomade équipé de moyens de géolocalisation et dans lequel une application logicielle de géoguidage obtenue avec le procédé de production selon la revendication 1 ou 2 a été préalablement chargé, comprenant les étapes suivantes :
- géolocaliser l'appareil nomade et traiter les données de géolocalisation,
- détecter une localisation dudit appareil nomade sur un spot parmi une pluralité de spots au sein d'une zone géographique prédéterminée,
- acquérir et traiter des données comportementales sur ledit spot et/ou sur des spots antérieurs, et
- sélectionner parmi des contenus multimédia interactifs stockés dans ladite application logicielle, un contenu multimédia interactif en relation avec ledit spot détecté et le traitement desdites données comportementales, et
- visualiser sur ledit appareil nomade ledit contenu multimédia interactif ainsi sélectionné.

8. Procédé de géoguidage selon la revendication 7, **caractérisé en ce qu'**il comprend en outre une étape pour visualiser sur l'appareil nomade les spots et le parcours effectué par l'utilisateur au sein de la zone géographique prédéterminée.

9. Procédé de géoguidage selon la revendication 7 ou 8, **caractérisé en ce qu'**il comprend en outre une étape pour saisir sur l'appareil nomade un profil de l'utilisateur.

10. Procédé de géoguidage selon l'une des revendications 7 à 9, **caractérisé en ce qu'**il comprend en outre une étape pour générer un avatar de l'utilisateur, prévu pour être visualisé sur l'écran de l'appareil nomade.

11. Procédé de géoguidage selon l'une des revendications 7 à 10, **caractérisé en ce qu'**il comprend en outre une étape pour collecter à des fins statistiques des informations sur la déambulation d'utilisateurs d'appareils nomades dans lesquels des applications logicielles obtenues avec le procédé de production selon l'une des revendications 1 ou 2 sont embarquées.
